**Europäisches Patentamt**

**European Patent Office**

**Office européen des brevets**

(19)

(11) Veröffentlichungsnummer: **0 214 139**
**B1**

(12) # EUROPÄISCHE PATENTSCHRIFT

(45) Veröffentlichungstag der Patentschrift:
**23.11.88**

(51) Int. Cl.⁴: **B 60 J 5/04**

(21) Anmeldenummer: **85902477.0**

(22) Anmeldetag: **31.05.85**

(86) Internationale Anmeldenummer:
**PCT/DE 85/00188**

(87) Internationale Veröffentlichungsnummer:
**WO 85/05599 (19.12.85 Gazette 85/27)**

(54) **TÜR AUS KUNSTSTOFF FÜR KRAFTFAHRZEUGE.**

(30) Priorität: **04.06.84 DE 3420744**
**28.06.84 DE 3423827**

(43) Veröffentlichungstag der Anmeldung:
**18.03.87 Patentblatt 87/12**

(45) Bekanntmachung des Hinweises auf die Patenterteilung:
**23.11.88 Patentblatt 88/47**

(84) Benannte Vertragsstaaten:
**AT BE CH DE FR GB IT LI LU NL SE**

(56) Entgegenhaltungen:
**EP-A-0 015 201**
**DE-A-2 014 805**
**DE-A-3 104 681**
**DE-C-703 137**
**FR-A-1 168 892**
**FR-A-1 597 263**
**FR-A-2 416 809**

(73) Patentinhaber: **Stübbe GmbH, Ismaninger Str. 67a,
D-8000 München 80 (DE)**

(72) Erfinder: **Der Erfinder hat auf seine Nennung
verzichtet**

(74) Vertreter: **Schirmer, Siegfried, Osningstrasse 10,
D-4800 Bielefeld 1 (DE)**

EP 0 214 139 B1

**Beschreibung**

Die Erfindung betrifft eine Tür aus Kunststoff für Kraftfahrzeuge, die auf einer mittleren Tragkonstruktion zur Übertragung der auftretenden Kräfte in den Rahmen der Karosserie und einer an dieser Tragkonstruktion befestigten Türaußenschale und einer Türinnenschale besteht.

Unbestritten stellt die Tür ein sehr kompliziertes steil der Karosserie dar. Die Tür muß eine außerordentlich hohe Festigkeit aufweisen und auch nach einem Aufprallunfall noch funktionstüchtig sein.

Diesen Anforderungen genügt im allgemeinen eine Tür aus Stahlblech. Die Bemühungen zur Reduzierung des Gewichts führten bereits zu Ausführungen, bei denen auf einer Versteifung aus Stahlprofilen eine Türaußenschale aus Kunststoff und eine Türinnenschale ebenfalls aus Kunststoff aufgebracht sind. Die Versteifung aus Stahlprofilen überträgt hierbei die auftretenden Kräfte in den Rahmen der Karosserie. Die Außen- und Innenschalen sind bei einer bekannten Ausführung im Tiefziehverfahren hergestellt und miteinander verbunden.

Diese Türen stellen eine Kombination verschiedener Werkstoffe dar und genügen nicht den Anforderungen im Automobilbau, insbesondere auch im Hinblick auf die Sicherheit.

Aus der DE-A-3 104 681 ist bereits eine Tür aus Kunststoff bekannt geworden, die mit einem zur Aufnahme der Türaußenschale und der Türinnenschale geeigneten Versteifung versehen ist, wobei alle diese Teile aus Kunststoff bestehen. Hierbei wird die innere Versteifung durch Klebstoff oder in anderer geeigneter Weise an der äußeren Türaußenschale befestigt. Diese Ausführung stellt keine verwindungssteife Konstruktion dar und ist nicht in der Lage, die bei Unfällen auftretenden Kräfte in den Metallrahmen der Karosserie zu übertragen.

Der Erfindung liegt die Aufgabe zugrunde, eine Tür für Kraftfahrzeuge aus Kunststoff im Gewicht weiter zu reduzieren und sie so auszubilden, daß sie bei Verzicht einer Versteifung aus Stahlprofilen allen gestellten Anforderungen voll entspricht und dabei noch große Sicherheitsreserven aufweist.

Diese Aufgabe wird erfindungsgemäß dadurch gelöst, daß die Tragkonstruktion aus einem umlaufenden mit mehreren Versteifungsrippen versehenen ein- oder mehrstückigen Profilrahmen mit unterhalb der Fensteröffnung eingespritzter Verstärkung aus waagerecht verlaufenden Lastprofilen und vertikal verlaufenden Rippen in Form einer Gitterkonstruktion gebildet ist.

Durch diese Ausbildung ist eine verwindungssteife Rahmenkonstruktion geschaffen. Die Lastprofile ermöglichen eine Kraftübertragung zwischen den Scharnieren und dem Bereich des Verriegelungsmechanismus.

Durch die vertikal verlaufenden Rippen werden die Lastprofile bei Unfällen in ihrer horizontalen Position gehalten. Das aus den horizontal verlaufenden Lastprofilen und den vertikal verlaufenden Rippen gebildete Gitterwerk stellt eine Sicherheitszelle dar, die die bei Unfällen auftretenden Kräfte in den Metallrahmen der Karosserie überträgt.

In Ausgestaltung der Erfindung weist der Profilrahmen im Querschnitt Doppel-T-Form oder U-Form auf. Am Steg des Doppel-T-förmigen Profilrahmens sind beidseitig und am Steg des U-förmigen Profilrahmens parallel zu den Flanschen verlaufende Versteifungsrippen eingespritzt. Diese Verseifungensrippen dienen primär zur Versteifung des Profilrahmens.

Ein weiteres Merkmal der Erfindung besteht darin, daß die Türaußenverkleidung auf der Verkleidungsinnenfläche eine Flächenversteifung, die zweckmäßigerweise eine asymmetrische Sternform mit unterschiedlichen Wandstärken besitzt, aufweist. Die Außenseite der Fensterscheibe kann vorteilhafterweise annähernd in einer Ebene mit der Fensterblende und der Türaußenschale liegen. Hierdurch wird im Fensterbereich der Tür ein günstiger Cw-Wert erreicht und Windgeräusche weitgehend vermieden.

Weitere Merkmale der Erfindung sind in den Unteransprüchen aufgezeigt.

Durch die Erfindung ist eine überwiegend im Spritzgießverfahren hergestellte Vollkunststoff-Tür für Kraftfahrzeuge geschaffen, die eine beachtliche Gewichtseinsparung aufweist und den vorgegebenen Sicherheitsanforderungen gerecht wird bzw. diese in hohem Maße überschreitet. Erstmals ist es damit im Karosseriebau für die Automobilindustrie durch den Einsatz einer hochwertigen Kunststofftür nach dem Spritzgießverfahren möglich, den Fahrgastraum von den Seitenteilen her als echte Sicherheitszelle zu gestalten. Anforderung und Standard an die bis heute eingesetzten Türkonstruktionen aus Karosserieblech liegen in den Festigkeitswerten bei einer statischen Biegelast von 3 000 kg.

Die überwiegend im Spritzgießverfahren aus hochwertigen modifizierten thermoplastischen Kunststoffen hergestellte Kunststofftür in der erfindungsgemäßen Gestaltung hält einer statischen Biegelast zwischen 6 000 kg und 9 000 kg stand, je nach dem wie die Lastprofile dimensioniert sind. Die Kunststofftür gewährleistet damit eine verwindungssteife Seitenkonstruktion der Fahrgastzelle. Besonders bei gefährlichen Auffahrunfällen ist ein beachtlicher Sicherheitsgewinn gegenüber den noch heute bestehenden Türkonstruktionen gegeben. Es ist auch möglich, zur Herstellung der Tür teilweise andere Kunststoffe, z. B. Duroplaste oder Elastomere, zu verwenden, insbesondere für die Schalen.

Die Lastübertragung bei der Kunststofftür erfolgt in zwei Stufen. Bei leichten Unfällen erfolgt die Lastübertragung zwischen den Scharnieren und dem Verriegelungsmechanismus. Bei schweren Unfällen wird zusätzlich der Profilrahmen der Türtragkonstruktion in den Metallrahmen des Fahrzeugskelettes gepreßt. Hierbei erfolgt keine Funktionsbeeinträchtigung der Tür, insbesondere im Hinblick darauf, daß sich die Tür immer öffnen lassen muß.

Ausführungsbeispiele der Erfindung sind in der Zeichnung dargestellt und werden im folgenden näher beschrieben.

Es zeigen:

Fig. 1 eine schaubildliche Darstellung eines Profilrahmens mit eingespritzter Gitterkonstrution, einer Türaußenschale und einer Türinnenschale, teilweise geschnitten, vor dem Zusammenfügen;

Fig. 2 eine schaubildliche Darstellung einer Variante eines Profilrahmens mit eingespritzter Gitterkonstruktion;

Fig. 3a einen Schnitt durch einen T-förmigen Profilrahmen im Fensterbereich mit angeschlossener Fensterblende einschließlich Fensterscheibe sowie eingeklebtem Türdichtungsband;

Fig. 3b wie Fig. 3a, jedoch Schnitt im Bereich des Scheibenkastens;

Fig. 3c wie Fig. 3a, jedoch Schnitt im Bodenbereich;

Fig. 4a einen Schnitt durch einen U-förmigen Profilrahmen im Fensterbereich mit angeschlossener Fensterblende einschließlich Fensterscheibe sowie eingeklebtem Türdichtungsband;

Fig. 4b wie Fig. 4a, jedoch schnitt im Bereich des Scheibenkastens;

Fig. 4c wie Fig. 4a, jedoch Schnitt im Bodenbereich;

Fig. 5a bis 5c Schnitte einer Variante zu den Fig. 3a bis 3c;

Fig. 6a bis 6c Schnitte einer Variante zu den Fig. 4a bis 4c;

Fig. 7 eine Variante zur Fig. 4a in schaubildlicher Darstellung mit besonders großer Verbindungsfläche zwischen Fensterblende und Profilrahmen;

Fig. 8 eine Variante zur Fig. 4a in schaubildlicher Darstellung mit einer Türblende am Profilrahmen;

Fig. 9 eine schaubildliche Darstellung eines unteren Hauptbereichsteils der Tragkonstruktion;

Fig. 10 eine Variante zur Fig 4b mit separatem Kunststoffensterrahmen;

Fig. 11 eine Variante zur Fig. 4b mit separatem Metallfensterrahmen;

Fig. 12 eine weitere Variante zur Fig. 4b mit separatem Metallfensterrahmen und

Fig. 13 eine Variante zur Fig. 4a für eine Tür ohne Fensterrahmen.

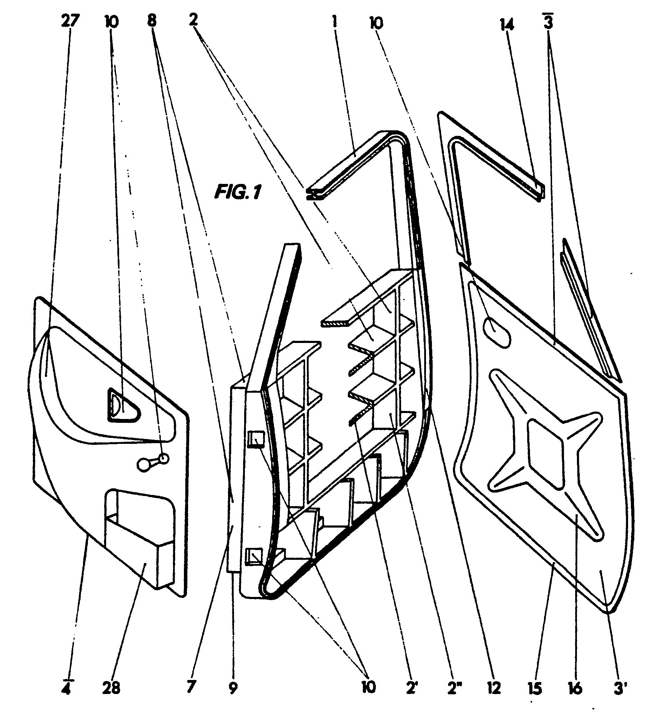

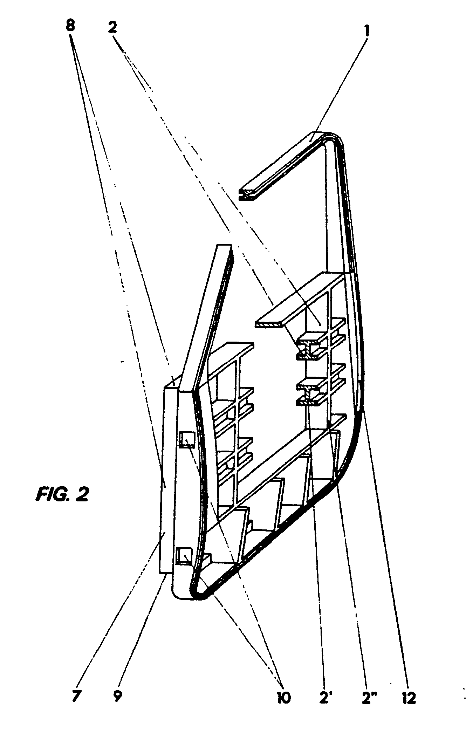

Wie aus Fig. 1 ersichtlich, ist in einem umlaufenden, im Querschnitt Doppel-T-Form aufweisenden Profilrahmen 1 eine Verstärkung 2 in Form einer Gitterkonstruktion eingespritzt, die aus horizontal verlaufenden Lastprofilen 2' und Vertikalrippen 2'' gebildet ist. Die Lastprofile 2' können beliebigen Querschnitt aufweisen. In Fig. 1 sind Lastprofile 2' mit V-förmigem Querschnitt und in Fig. 2 solche mit Doppel-T-förmigem Querschnitt dargestellt. Durch den Profilrahmen 1 ist eine verwindungssteife Rahmenkonstruktion geschaffen, die zusammen mit der Verstärkung 2 die Tragkonstruktion der Tür bilden, die als Tür-Sicherheitszelle anzusehen ist. Zur Verbesserung der Steifigkeit besitzt der Doppel-T-förmige Profilrahmen 1 beidseitig am Steg eingespritzte, parallel zu den Flanschen verlaufende Versteifungsrippen 5, die im gleichmäßigen Abstand voneinander angeordnet sind.

Die Außenseite der Gitterkonstruktion 2' und 2'' ist zur Führung der Fensterscheibe 11 ausgespart. Die Vertikalrippen 2' reichen unterhalb des Scheibenbereiches bis unmittelbar an die Innenfläche der Türaußenschale 3 heran. Zur seitlichen Führung der Fensterscheibe 11 sind an der nach außen weisenden Seite der Gitterkonstruktion 2' und 2'' Führungsleisten 12 angeordnet, die ebenfalls aus Kunststoff bestehen und die eingeklebt sind. Gemäß Fig. 1 ist die Türaußenschale 3 aus einer Fensterblende 14 mit einer unterhalb der Fensteröffnung angeordneten Türaußenverkleidung 3' gebildet, wobei die Fensterblende 14 einen Z-förmigen Querschnitt aufweist und in waagerechter Richtung geteilt ist. Auf der Innenseite der Türaußenverkleidung 3' ist eine Flächenversteifung 16 in asymmetrischer Sternform angeordnet, die unterschiedliche Wandstärken aufweist. Die Gitterkonstruktion 2' + 2'' ragt auf der Innenseite über den umlaufenden Profilrahmen 1 hinaus, dessen innenliegende Schenkel 7 waagerecht und vertikal im unteren Teil der Tragkonstruktion 1 + 2 verlängert sind und auf der Innenseite einen Rahmen 6 bilden. Es besteht auch die Möglichkeit, daß die Gitterkonstruktion 2' und 2'' und der Profilrahmen 1 auf der Innenseite bündig verlaufen. Der Rahmen 8 besitzt im Bodenbereich nach innen abgesetzte Stufen 9.

Die Türinnenblende 4 besitzt ein Formpolster mit großer Prallfläche, das bei Unfallgeschehen stoßmindernd wirkt. Verstärkt wird dieser Effekt durch Gummipuffer, die sich zwischen den Rippenkonstruktionen der Türinnenschale 4 und der Tragkonstruktion 1 + 2 befinden. Die Armlehne 27 ist in die Türinnenverkleidung 4 integriert. Die Schloß-, Griff- und Kurbelteile sind aus Gründen der Verletzungsgefahr vertieft angeordnet. Andernfalls erhalten die Bauteile eine ausreichende Prallfläche. Die Türinnenschale 4 ist zweckmäßigerweise mit einem Textilmaterial kaschiert.

Die als Fertigteile herstellbare Tragkonstruktion, die aus dem Profilrahmen 1 und der Verstärkung 2, die wiederum durch die eine Gitterkonstruktion bildenden Lastprofile 2' und den Vertikalrippen 2'' gebildet ist, bestehen, ist ebenso wie die Türaußenschale 3 und die Türinnenschale 4 aus hochwertigen modifizierten thermoplastischen Kunststoffen im Spritzgießverfahren hergestellt. Formtechnisch bietet das Spritzgießverfahren nahezu unbegrenzte Gestaltungsmöglichkeiten, so daß an sich jede Formgebung herstellbar ist. Die Montagepositionen für Scharniere, Schlösser, Zentrierungen und Spiegel werden, soweit sich diese formtechnisch lösen lassen, montagefertig gespritzt.

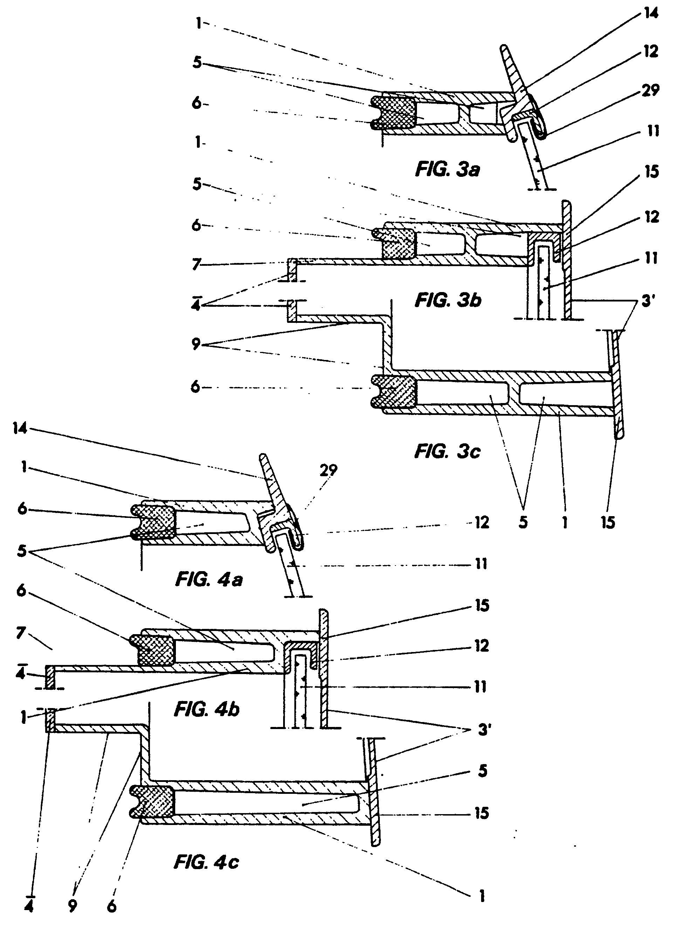

Aus den Fig. 3a bis 3c ist die Anordnung einer Fensterblende 14 und einer Außenverkleidung 3 an einem T-förmigen Profilrahmen 1 in verschiedenen Schnittebenen dargestellt. Im Fensterbereich ist in die in diesem Bereich Z-förmigen Querschnitt aufweisende Fensterblende 14 eine Führungsleiste 12 winkelförmigen Querschnittes eingelassen. Im Bereich des Scheibenkastens besitzt die aus Kunststoff bestehende Führungsleiste 12 U-förmigen Querschnitt und die Türaußenverkleidung 3' auf der zur Tragkonstruktion 1 und 2 weisenden Seite ein umlaufendes Flächenprofil 15, über das die Türaußenverkleidung 3' am Profilrahmen 1 durch Kleben oder Schweißen angeschlossen ist. Hierbei ist das Flächenprofil 15 im Anschlußbereich verstärkt ausgebildet. Auf der Innenseite des Profilrahmens 1 ist ein umlaufendes Türdichtungsband 6 eingeklebt, das stumpf an den Versteifungsrippen 5 anliegt. Bekannterweise ist an der Fensterblende 14 eine Zierleiste 29 angeordnet.

Eine Variante der Querschnittgestaltung des Profilrahmens 1 mit der entsprechenden Anordnung einer Fensterblende 14 und einer Türaußenverkleidung 3' ist in den Fig. 4a bis 4c dargestellt.

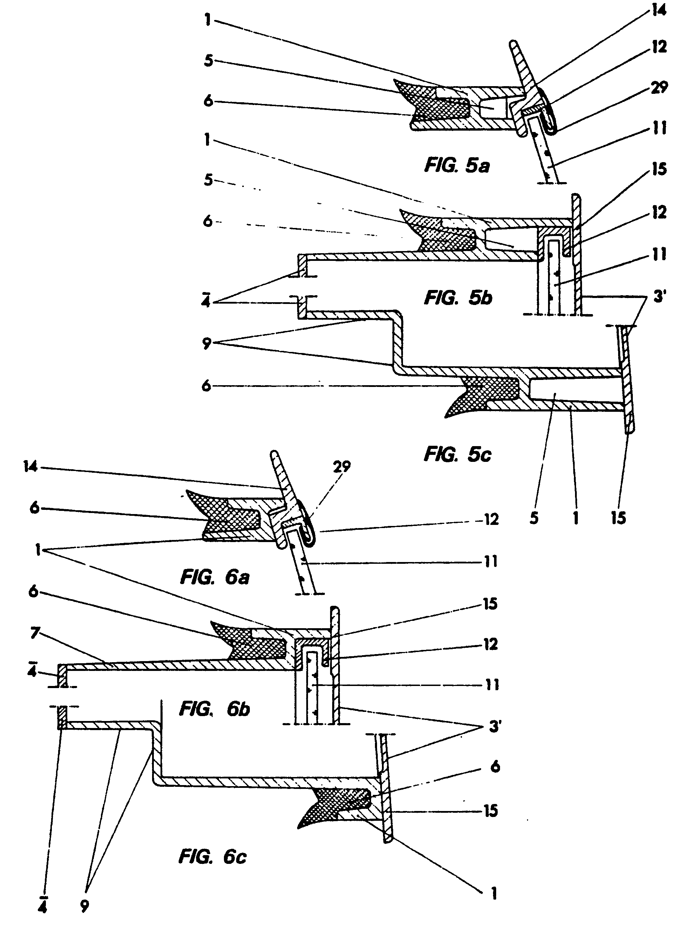

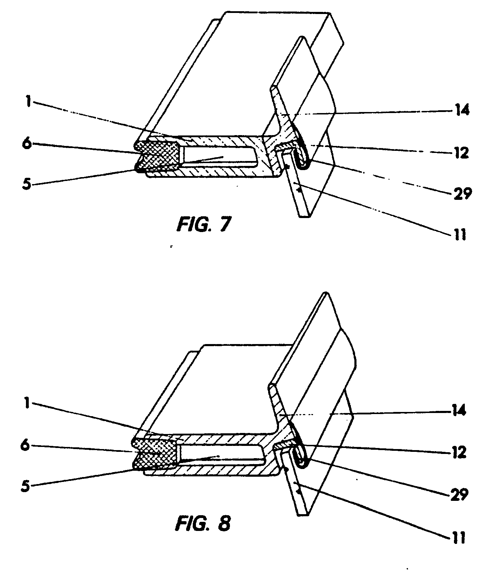

Im U-förmigen Profilrahmen 1 sind ebenfalls Versteifungsrippen 5 angeordnet. Anstelle der in den Fig. 3 bis 8 dargestellten Führungsleisten 12 aus Kunststoff zur seitlichen Führung der Fensterscheibe 11 kann ein U-förmiges Metallprofil zur Scheibenführung angeordnet sein.

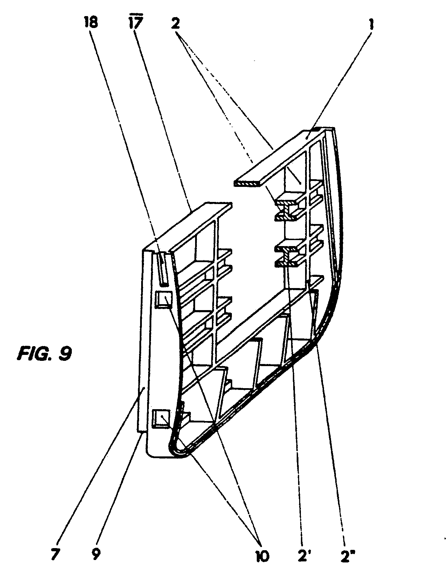

Bei der Variante nach Fig. 9 ist ein unterer Türhauptbereichteil 17 der Tragkonstruktion 1 + 2 dargestellt, dem ein Fensterbereichsteil zugeordnet ist. An der oberen äußeren Begrenzung des Türhauptbereichteils 17 ist je eine Ausnehmung 18 zur Aufnahme eines den Fensterbereichsteil bildenden Fensterrahmens aus Kunststoff 19 oder Metall 19' angeordnet. Die Verbindung zwischen den Fensterrahmen 19 bzw. 19' und dem aus Kunststoff bestehenden Türhauptbereichsteil 17 Kann beliebig erfolgen, vorteilhafterweise durch Verschraubung.

Der aus Kunststoff bestehende Fensterrahmen 19 besitzt ein Trägerprofil 20 und ein Scheibenführungsprofil 21, wobei das Scheibenführungsprofil 21 U-Form aufweist und in das Trägerprofil 20 eingeklebt ist.

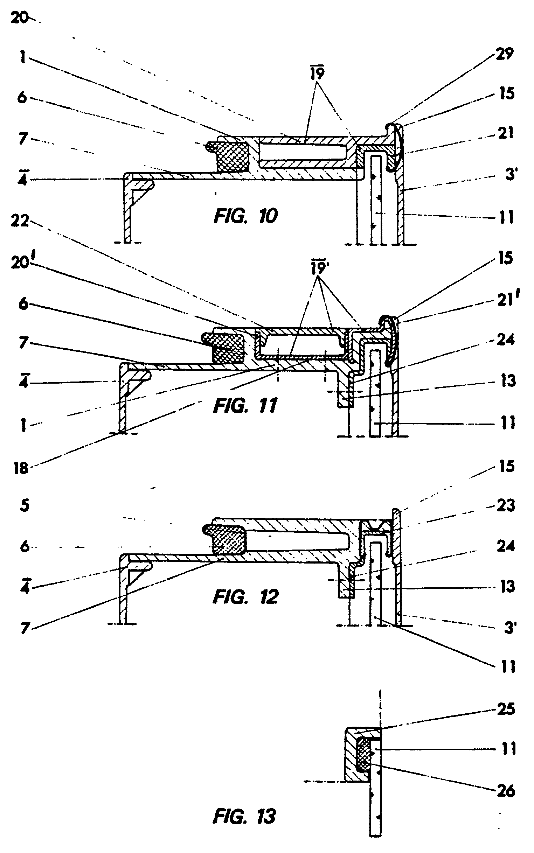

Der aus Metall bestehende Fensterrahmen 19' besteht nach Fig. 11 aus einem Trägerprofil 20' und einem Scheibenführungsprofil 21', wobei das Trägerprofil 20' durch ein umlaufendes Kunststoffabdeckprofil 22 abgedeckt ist.

Die Scheibenführung im Fensterbereich und im Scheibenkasten kann durch einen gemeinsamen Metallrahmen 23 erfolgen. Der Metallrahmen 23 besitzt hierzu im Fensterbereich U-förmigen Querschnitt und im Scheibenkastenbereich zusätzlich Montageschenkel 24, die an Montagerippen 13 des Profilrahmens 1 angeschraubt sind.

Gemäß Fig. 13 ist die Tür im Fensterbereich rahmenlos gestaltet. Hierbei erfolgt die Scheibenführung auf einem Führungsprofil 25 aus Kunststoff, das in den Türrahmen eingelassen ist, und einem Fensterdichtungsband 26, das in das Führungsprofil 25 eingeklebt ist.

Der Ablagekasten 28 besteht aus Kunststoff und ist zweckmäßigerweise in die Türinnenschale 4 eingeklebt. Wie aus Fig. 1 ersichtlich, sind alle erforderlichen Montagepositionen 10 in der Türinnenschale 4 der Türaußenverkleidung 3' und in den Tragkonstruktionen 1 + 2 angeordnet. Die waagerechten Lastprofile 2' und die vertikal verlaufenden Rippen 2'' weisen an ihren Verbindungs- und Anschlußstellen verstärkte und abgerundete Anbindungen auf.

Die erfindungsgemäße Tür aus Kunststoff kann bei allen Kraftfahrzeugarten und -typen Verwendung finden, auch als Klappe.

Im vorliegenden Fall stellt die Tür eine typische Bauteile-Gruppe dar, die aus hochwertigen Chemiewerkstoffen gefertigt ist. Durch die Kombination verschiedener Chemiewerkstoffe mit jeweils speziellem Eigenschaftscharakter wird eine Karosserie-Tür in Leichtbauweise geschaffen, die höchsten Sicherheitsanforderungen gerecht wird.

Für das Lastteil, die Tragkonstruktion, bietet sich z. B. ein modifizierter thermoplastischer Werkstoff in Form eines modifizierten Polyamid - 6 Types in ungefüllter oder gefüllter Ausführung an. Für das Profil-Lastteil ist dabei u. a, besonders hohe Festigkeit bei entsprechender Steifigkeit erforderlich.

Für die Türaußenschale ist u. a. ein mineralgefüllter duroplastischer Werkstoff oder ein modifizierter thermoplastischer Werkstoff in Form eines hochschlagzähen modifizierten Polybutylen-Teraphtalat (PBTP) geeignet. Im Vordergrund stehen hier u. a. Steifigkeit und gute optische Oberflächengüte.

Für die Türinnenschale eignet sich z. B. ein thermoplastischer Werkstoff wie Polypropylen oder ein PUR-Werkstoff. Dieses Bauteil hat als Verkleidung auch Aufgaben der inneren Sicherheit zu erfüllen.

Die Entwicklung bei hochwertigen Chemiewerkstoffen ist noch nicht abgeschlossen. In der Kunststofforschung wird besonders an maßgeschneiderten Polymerwerkstoffen gearbeitet, die sich durch hohe mechanische und thermische Belastbarkeit, spezielle optische Eigenschaften, selbstverstärkenden Charakter (Liquid Crystals), ausgezeichneter Chemikalienbeständigkeit usw. auszeichnen. Polymer-Blends mit einem attraktiven Preis/Leistungs-Verhältnis werden schon mittelfristig im Karosseriebau der Automobilindustrie einen neuen Markt erschließen.

Die Fertigung von Karosserieteilen aus Chemiewerkstoffen in Leichtbauweise und Großserie steht dabei unter der Maßgabe, daß ein bedeutender technischer Fortschritt, Kostenoptimierung bei besserer Qualität, Fertigungsverbesserungen zur Arbeitserleichterung und eine Reduzierung der Fertigungskosten erreicht wird.

Stübbe hat in neuer Technologie für den Karosseriebau mit Chemiewerkstoffen für die Automobilindustrie eine Karosseriemaschinenbaureihe für die Großserienfertigung entwickelt, die diese Aufgabe erfüllt.

Aufstellung der Bezugszeichen

| 1 | Profilrahmen | Trag- |
|---|---|---|
| 2 | Verstärkung | konstruktion |
| 2' | Lastprofile | Gitter- |
| 2'' | Vertikalrippen | konstruktion |
| 3 | Türaußenschale | |
| 3' | Türaußenverkleidung | |
| 4 | Türinnenschale | |
| 5 | Versteifungsrippen | |
| 6 | Türdichtungsband | |
| 7 | Schenkel | |
| 8 | Rahmen | |
| 9 | Stufe von 8 | |
| 10 | Montagepositionen | |
| 11 | Fensterscheibe | |
| 12 | Führungsleiste Kunststoff | |
| 13 | Montagerippe | |
| 14 | Fensterblende | |
| 15 | Flächenprofil von 3' | |
| 16 | Flächenversteifung von 3' | |
| 17 | Türhauptbereichsteil von 1 + 2 | |
| 18 | Ausnehmung | |
| 19 | Fensterrahmen Kunststoff | |
| 19' | Fensterrahmen Metall | |
| 20 | Trägerprofil von 19 | |
| 20' | Trägerprofil von 19' | |
| 21 | Scheibenführungsprofil von 19 | |
| 21' | Scheibenführungsprofil von 19' | |
| 22 | Kunststoffabdeckprofil von 19' | |
| 23 | Metallrahmen Scheibenführung | |
| 24 | Montageschenkel | |
| 25 | Kunststoffführungsprofil | |
| 26 | Fensterdichtungsband | |
| 27 | Armlehne | |
| 28 | Ablagekasten | |
| 29 | Zierleiste | |

**Patentansprüche**

1. Tür aus Kunststoff für Kraftfahrzeuge, die aus einer mittleren Tragkonstruktion zur Übertragung der auftretenden Kräfte in den Rahmen der Karosserie und einer an dieser Tragkonstruktion befestigten Türaußenschale und einer Türinnenschale besteht, dadurch gekennzeichnet, daß die Tragkonstruktion (1 + 2) aus einem umlaufenden mit mehreren Versteifungsrippen (5) versehenen ein- oder mehrstückigen Profilrahmen (1) mit unterhalb der Fensteröffnung eingespritzter Verstärkung (2) aus waagerecht verlaufenden Lastprofilen (2') und vertikal verlaufenden Rippen (2'') in Form einer Gitterkonstruktion gebildet ist.

2. Tür nach Anspruch 1, dadurch gekennzeichnet, daß der Profilrahmen (1) im Querschnitt Doppel-T-Form oder U-Form aufweist.

3. Tür nach Anspruch 1 oder 2, dadurch gekennzeichnet, daß der Profilrahmen (1) einen sich stufenlos verändernden Profilquerschnitt aufweist.

4. Tür nach einem der Ansprüche 1 bis 3, dadurch gekennzeichnet, daß beidseitig am Steg des Doppel-T-förmigen Profilrahmens (1) parallel zu den Flanschen verlaufende Versteifungsrippen (5) eingespritzt sind.

5. Tür nach einem der Ansprüche 1 bis 3, dadurch gekennzeichnet, daß am Steg des U-förmigen Profilrahmens (1) parallel zu den Flanschen verlaufende Versteifungsrippen (5) eingespritzt sind.

6. Tür nach Anspruch 4 oder 5, dadurch gekennzeichnet, daß die Versteifungsrippen (5) im gleichen Abstand voneinander angeordnet sind.

7. Tür nach einem der Ansprüche 1 bis 6, dadurch gekennzeichnet, daß in den Profilrahmen (1) der Türinnenseite ein umlaufendes Türdichtungsband (6) einlegbar ist.

8. Tür nach einem der Ansprüche 1 bis 7, dadurch gekennzeichnet, daß das Türdichtungsband (6) eingeklebt ist und stumpf an den Versteifungsrippen (5) anliegt.

9. Tür für Kraftfahrzeuge nach einem der Ansprüche 1 bis 8, dadurch gekennzeichnet, daß die Lastprofile (2') V-Form, Doppel-T-Form oder U-Form aufweisen.

10. Tür für Kraftfahrzeuge nach einem der Ansprüche 1 bis 9, dadurch gekennzeichnet, daß die Lastprofile (2') und die Vertikalrippen (2'') an ihren Verbindungs- und Anschlußteilen verstärkte Anbindungen aufweisen.

11. Tür für Kraftfahrzeuge nach Anspruch 10, dadurch gekennzeichnet, daß die Anbindungen abgerundet verlaufen.

12. Tür für Kraftfahrzeuge nach einem der Ansprüche 1 bis 11 dadurch gekennzeichnet, daß die Vertikalrippen (2'') im unteren Bereich zwischen dem Profilrahmen (1) und dem untersten waagerecht verlaufenden Lastprofil (2') unmittelbar bis an die Innenflächen der Türaußenschale (3) geführt sind.

13. Tür für Kraftfahrzeuge nach einem der Ansprüche 1 bis 12 dadurch gekennzeichnet, daß die waagerechten Lastprofile (2') und die vertikal verlaufenden Rippen (2'') auf der Innenseite der Tragkonstruktion (1 + 2) über den umlaufenden Profilrahmen (1) hinausragen.

14. Tür für Kraftfahrzeuge nach einem der Ansprüche 1 bis 13, dadurch gekennzeichnet, daß die innenliegenden Schenkel (7) des Profilrahmens (1) waagerecht und vertikal im unteren Teil der Tragkonstruktion (1 + 2) verlägert sind und auf der Innenseite einen Rahmen (8) bilden.

15. Tür für Kraftfahrzeuge nach Anspruch 14, dadurch gekennzeichnet, daß der Rahmen (8) im Bodenbereich stufig (9) nach innen abgesetzt ist.

16. Tür für Kraftfahrzeuge nach Anspruch 14 oder 15, dadurch gekennzeichnet, daß der Rahmen (8) in der Tragkonstruktion (1 + 2) mit den waagerechten Lastprofilen (2') und den vertikal verlaufenden Rippen (2") bündig abschließt.

17. Tür für Kraftfahrzeuge nach einem der Ansprüche 1 bis 16 dadurch gekennzeichnet, daß der umlaufende Profilrahmen (1) bündig mit der Gitterkonstruktion (2' + 2") verläuft.

18. Tür für Kraftfahrzeuge nach einem der Ansprüche 1 bis 17 dadurch gekennzeichnet, daß in der Tragkonstruktion (1 + 2) alle Montagepositionen (10) für Scharniere, Zentrierungen, Schloß-, Fenster- und Spiegelmechanik in Form von Flächen, Rippen, Winkeln, Löchern, Führungen und Lagern angeordnet sind.

19. Tür für Kraftfahrzeuge nach einem der Ansprüche 1 bis 18, dadurch gekennzeichnet, daß die Außenseite der Gitterkonstruktion (2' + 2") zur Führung der Fensterscheibe (11) ausgespart ist.

20. Tür für Kraftfahrzeuge nach einem der Ansprüche 1 bis 19, dadurch gekennzeichnet, daß zur seitlichen Führung der Fensterscheibe (11) Führungsleisten (12) angeordnet sind.

21. Tür für Kraftfahrzeuge nach Anspruch 20, dadurch gekennzeichnet, daß die Führungsleisten (12) L-Form oder U-Form aufweisen.

22. Tür für Kraftfahrzeuge nach Anspruch 20 oder 21, dadurch gekennzeichnet, daß die Führungsleisten (12) aus Kunststoff bestehen.

23. Tür für Kraftfahrzeuge nach einem der Ansprüche 20 bis 22, dadurch gekennzeichnet, daß die Führungsleisten (12) eingeklebt sind.

24. Tür für Kraftfahrzeuge nach Anspruch 20 oder 21, dadurch gekennzeichnet, daß die Führungsleisten durch Metallprofile gebildet sind.

25. Tür für Kraftfahrzeuge nach einem der Ansprüche 1 bis 25, dadurch gekennzeichnet, daß an der Tragkonstruktion (1 + 2) Montagerippen (13) angespritzt sind.

26. Tür für Kraftfahrzeuge nach Anspruch 25, dadurch gekennzeichnet, daß die aus einem U-förmigen Metallprofil gebildete Führungsleiste an der Montagerippe (13) angeschraubt ist.

27. Tür für Kraftfahrzeuge nach einem der Ansprüche 1 bis 26, dadurch gekennzeichnet, daß die Türaußenschale (3) aus einer umlaufenden Fensterblende (14) mit einer unterhalb der Fensteröffnung angeordneten Türaußenverkleidung (3') gebildet ist.

28. Tür für Kraftfahrzeuge nach Anspruch 27, dadurch gekennzeichnet, daß die Fensterblende (14) in waagerechter Richtung geteilt ist.

29. Tür für Kraftfahrzeuge nach Anspruch 27 oder 28, dadurch gekennzeichnet, daß die Fensterblende (14) Z-förmigen Querschnitt aufweist.

30. Tür für Kraftfahrzeuge nach einem der Ansprüche 1 bis 29, dadurch gekennzeichnet, daß die Führungsleiste (12) im Fensterbereich in die Fensterblende (14) eingelassen ist.

31. Tür für Kraftfahrzeuge nach einem der Ansprüche 1 bis 30, dadurch gekennzeichnet, daß die Fensterblende (14) an den Profilrahmen (1) angespritzt ist.

32. Tür für Kraftfahrzeuge nach einem der Ansprüche 1 bis 31, dadurch gekennzeichnet, daß die Fensterscheibe (11) annähernd in einer Ebene mit der Fensterblende (14) und der Türaußenschale (3) angeordnet ist.

33. Tür für Kraftfahrzeuge nach einem der Ansprüche 27 bis 32, dadurch gekennzeichnet, daß die Türaußenverkleidung (3') auf der zur Tragkonstruktion (1 + 2) weisenden Seite ein umlaufendes Flächenprofil (15) aufweist, das am Profilrahmen (1) anliegt und mit diesem verbindbar ist.

34. Tür für Kraftfahrzeuge nach Anspruch 33, dadurch gekennzeicnet, daß das Flächenprofil (15) der Türaußenverkleidung (3') im Verbindungsbereich verstärkt ausgebildet ist

35. Tür für Kraftfahrzeuge nach einem der Ansprüche 27 bis 34, dadurch gekennzeichnet, daß das am Profilrahmen (1) anliegende Flächenprofil (15) der Türaußenverkleidung (3') mit dem Profilrahmen (1 ) durch Kleben oder Schweißen verbunden ist.

36. Tür für Kraftfahrzeuge nach einem der Ansprüche 1 bis 35, dadurch gekennzeichnet, daß die Türaußenverkleidung (3') auf der Verkleidungsinnenfläche eine Flächenversteifung (16) aufweist.

37. Tür für Kraftfahrzeuge nach Anspruch 36, dadurch gekennzeichnet, daß die Flächenversteifung (16) asymmetrische Sternform aufweist.

38. Tür für Kraftfahrzeuge nach Anspruch 36 oder 37, dadurch gekennzeichnet, daß die Flächenversteifung (16) unterschiedliche Wandstärken aufweist.

39. Tür für Kraftfahrzeuge nach einem der Ansprüche 36 bis 38, dadurch gekennzeichnet, daß sich die Flächenversteifung (16) stufenlos von den Randzonen zur Mitte verstärkt.

40. Tür für Kaftfahrzeuge nach einem der Ansprüche 1 bis 39 dadurch gekennzeichnet, daß die Tragkonstruktion (1 + 2) aus einem unteren Türhauptbereichsteil (17) und einem Fensterbereichsteil gebildet ist.

41. Tür für Kraftfahrzeuge nach Anspruch 40, dadurch gekennzeichnet, daß an der oberen äußeren Begrenzung des Türhauptbeveichsteils (17) der Tragkonstruktion (1 + 2) je eine Ausnehmung (18) zur Aufnahme eines den Fensterbereichsteil bildenden Rahmens (19 + 19') angeordnet ist.

42. Tür für Kraftfahrzeuge nach Anspruch 40 oder 41, dadurch gekennzeichnet, daß der Fensterrahmen (19) aus Kunststoff gebildet ist.

43. Tür für Kraftfahrzeuge nach einem der Ansprüche 40 bis 42, dadurch gekennzeichnet, daß der aus Kunststoff bestehende Fensterrahmen (19) mit dem aus Kunststoff bestehenden Türhauptbereichsteil (17) verbindbar ist.

44. Tür für Kraftfahrzeuge nach einem der Ansprüche 40 bis 43, dadurch gekennzeichnet, daß dem aus Kunststoff bestehenden Fensterrahmen (19) ein Trägerprofil (20) und ein Scheibenführungsprofil (21) zugeordnet sind.

45. Tür für Kraftfahrzeuge nach einem der Ansprüche 40 bis 44 dadurch gekennzeichnet, daß das Scheibenführungsprofil (21) U-Form oder L-Form aufweist.

46. Tür für Kraftfahrzeuge nach einem der Ansprüche 40 bis 45 dadurch gekennzeichnet, daß das Scheibenführungsprofil (21) in das Trägerprofil (20) eingeklebt ist.

47. Tür für Kraftfahrzeuge nach Anspruch 40 oder 41, dadurch gekennzeichnet, daß der Fensterrahmen (19') aus Metall gebildet ist.

48. Tür Kraftfahrzeuge nach einem der Ansprüche 40 bis 47, dadurch gekennzeichnet, daß der aus Metall bestehende Fensterrahmen (19') mit dem aus Kunststoff bestehenden Türhauptbereichsteil (17) verschraubbar ist.

49. Tür für Kraftfahrzeuge nach Anspruch 47 oder 48, dadurch gekennzeichnet, daß dem aus Metall bestehenden Fensterrahmen (19') ein Trägerprofil (20') und ein Scheibenführungspofil (21') zugeordnet sind.

50. Tür für Kraftfahrzeuge nach einem der Ansprüche 47 bis 49, dadurch gekennzeichnet, daß das Trägerprofil (20') durch ein umlaufendes Kunststoffabdeckprofil (22) abgedeckt ist.

51. Tür für Kraftfahrzeuge nach einem der Ansprüche 1 bis 50, dadurch gekennzeichnet, daß die Scheibenführung im Fensterbereich und im Scheibenkasten durch einen gemeinsamen Metallrahmen (23) gebildet ist.

52. Tür für Kraftfahrzeuge nach Anspruch 51, dadurch gekennzeichnet, daß der Metallrahmen (23) im Fensterbereich U-förmigen Querschnitt und im Scheibenkastenbereich zusätzlich Montageschenkel (24) aufweist.

53. Tür für Kraftfahrzeuge nach Anspruch 51 oder 52, dadurch gekennzeichnet, daß der Metallrahmen (23) im Scheibenkasten an die Montagerippen (13) angeschraubt ist.

54. Tür für Kraftfahrzeuge nach einem der Ansprüche 1 bis 53, dadurch gekennzeichnet, daß die Tür im Fensterbereich rahmenlos gestaltet ist und die Scheibenführung auf einem Führungsprofil (25) aus Kunststoff und einem Fensterdichtungsband (26) erfolgt.

55. Tür für Kraftfahrzeuge nach Anspruch 54, dadurch gekennzeichnet, daß das Führungsprofil (25) in den Türrahmen eingelassen ist.

56. Tür für Kraftfahrzeuge nach Anspruch 54 oder 55, dadurch gekennzeichnet, daß das Fensterdichtungsband (26) in das Führungsprofil (25) eingeklebt ist.

57. Tür für Kraftfahrzeuge nach einem der Ansprüche 1 bis 56, dadurch gekennzeichnet, daß die Türinnenschale (4) ein Formpolster mit Prallfläche aufweist.

58. Tür für Kraftfahrzeuge nach einem der Ansprüche 1 bis 57, dadurch gekennzeichnet, daß die Armlehne (27) in die Türinnenschale (4) eingespritzt ist.

59. Tür für Kraftfahrzeuge nach einem der Ansprüche 1 bis 58, dadurch gekennneichnet, daß die Schloß-, Griff- und Kurbelteile vertieft in der Türinnenschale (4) angeordnet sind.

60. Tür für Kraftfahrzeuge nach einem der Ansprüche 1 bis 59, dadurch gekennzeichnet, daß die Türinnenschale (4) auf der aus Tragkonstruktion weisenden Seite ein umlaufendes Winkelprofil aufweist, das am Profilrahmen (1) anliegt und mit diesem verbindbar ist.

61. Tür für Kraftfahrzeuge nach Anspruch 60, dadurch gekennzeichnet, daß das Winkelprofil der Türinnenschale (4) im Verbindungsbereich verstärkt ausgebildet ist.

62. Tür für Kraftfahrzeuge nach einem der Ansprüche 1 bis 61, dadurch gekennzeichnet, daß die Türinnenschale (4) geklippt oder geschraubt an der Tragkonstruktion (1 + 2) befestigt ist.

63. Tür für Kraftfahrzeuge nach einem der Ansprüche 1 bis 62, dadurch gekennzeichnet, daß in die Türinnenschale (4) alle Montagepositionen (10) für die Schloß- und Fenstermechanik in Form von vertieften Flächen, Rippen, Winkeln, Löchern, Führungen und Lagern angeordnet sind.

64. Tür für Kraftfahrzeuge nach einem der Ansprüche 1 bis 63, dadurch gekennzeichnet, daß die Türinnenschale (4) auf der Verkleidungsinnenfläche eine Flächenversteifung in Form einer Rippenkonstruktion aufweist.

65. Tür für Kraftfahrzeuge nach Anspruch 64, dadurch gekennzeichnet, daß die Rippenkonstruktion der Türinnenschale (4) bis auf die Lastprofile (2') der Tragkonstruktion (1 + 2) geführt ist und an diesen anliegt.

66. Tür für Kraftfahrzeuge nach Anspruch 64 oder 65, dadurch gekennzeichnet, daß zwischen der Anlage der Rippenkonstruktion der Türinnenschale (4) und den Lastprofilen (2') der Tragkonstruktion (1 + 2) ein Gummiprofil angeordnet ist.

67. Tür für Kraftfahrzeuge nach einem der Ansprüche 1 bis , dadurch gekennzeichnet, daß in die Türinnenschale (4) ein Ablagekasten (28) aus Kunststoff eingeklebt ist.

68. Tür für Kraftfahrzeuge nach einem der Ansprüche 1 bis 67, dadurch gekennzeichnet, daß die Türinnenschale (4) mit einem Textilmaterial kaschiert ist.

69. Tür für Kraftfahrzeuge nach einem der Ansprüche 1 bis 68, dadurch gekennzeichnet, daß die Tragkonstruktion (1 + 2) und die Türinnenschale (4) zu einem Kunststoffteil zusammengefaßt sind.

## Claims

1. Door of synthetic material and for motor vehicles, which consists of a middle carrier construction for the transmission of the arising forces into the frame of the chassis and an outer door shell and an inner door shell which are fastened at this carrier construction, characterised thereby, that the carrier construction (1 + 2) is formed of a surrounding profile frame (1), of one or more parts and provided with several stiffening ribs (5), with a re-inforcement (2) of horizontally extending load profiles (2') and vertically extending ribs (2'') in the form of a grid construction injection-moulded in below the window opening.

2. Door according to claim 1, characterised thereby, that the profile frame (1) displays double-T-shape or U-shape in cross-section.

3. Door according to claim 1 or 2, characterised thereby, that the profile frame (1) displays a steplessly changing profile cross-section.

4. Door according to one of the claims 1 to 3, characterised thereby, that stiffening ribs (5), which extend parallelly to the flanges, are injection-moulded in at both sides at the web of the double-T-shaped profile frame (1).

5. Door according to one of the claims 1 to 3, characterised thereby, that stiffening ribs (5), which extend parallelly to the flanges, are injection-moulded in at the web of the U-shaped profile frame (1).

6. Door according to claim 4 or 5, characterised thereby, that the stiffening ribs (5) are arranged at equal spacing one from the other.

7. Door according to one of the claims 1 to 6, characterised thereby, that a surrounding door-sealing strip (6) is insertable into the profile frame (1) of the inward door side.

8. Door according to one of the claims 1 to 7, characterised thereby, that the door-sealing strip (6) is glued in and lies abutting against the stiffening ribs (5).

9. Door for motor vehicles according to one of the claims 1 to 8, characterised thereby, that the load profiles (2') display V-shape, double-T-shape or U-shape.

10. Door for motor vehicles according to one of the claims 1 to 9, characterised thereby, that the load profiles (2') and the vertical ribs (2'') display re-inforced ties at their places of connection and attachment.

11. Door for motor vehicles according to claim 10, characterised thereby, that the ties extend rounded off.

12. Door for motor vehicles according to one of the claims 1 to 11, characterised thereby, that the vertical ribs (2'') in the lower region between the profile frame (1) and the lowermost horizontally extending load profile (2') are led directly to the inward surfaces of the outer door shell (3).

13. Door for motor vehicles according to one of the claims 1 to 12, characterised thereby, that the horizontal load profiles (2') and the vertically extending ribs (2'') project beyond the surrounding profile frame (1) on the inward side of the carrier construction (1 + 2).

14. Door for motor vehicles according to one of the claims 1 to 13, characterised thereby, that the inwardly disposed limbs (7) of the profile frame (1) are prolonged horizontally and vertically in the lower part of the carrier construction (1 + 2) and form a frame (8) on the inward side.

15. Door for motor vehicles according to claim 14, characterised thereby, that the frame (8) is reduced inwardly in the base region in stepped (9) manner.

16. Door for motor vehicles according to claim 14 or 15, characterised thereby, that the frame (8) closes off flush with the horizontal load profiles (2') and the vertically extending ribs (2'') in the carrier construction (1 + 2).

17. Door for motor vehicles according to one of the claims 1 to 16, characterised thereby, that the surrounding profile frame (1) extends flush with the grid construction (2' + 2'').

18. Door for motor vehicles according to one of the claims 1 to 17, characterised thereby, that all mounting positions (10) for hinges, centring devices and mechanisms for lock, window and mirror are arranged in the shape of surfaces, ribs, angles, holes, guides and bearings in the carrier construction (1 + 2).

19. Door for motor vehicles according to one of the claims 1 to 18, characterised thereby, that the outward side of the grid construction (2' + 2'') is recessed for the guidance of the window pane (11).

20. Door for motor vehicles according to one of the claims 1 to 19, characterised thereby, that guide strips (12) are arranged for the lateral guidance of the window pane (11).

21. Door for motor vehicles according to claim 20, characterised thereby, that the guide strips (12) display L-shape or U-shape.

22. Door for motor vehicles according to claim 20 or 21, characterised thereby, that the guide strips (12) consist of synthetic material.

23. Door for motor vehicles according to one of the claims 20 to 22 characterised thereby, that the guide strips (12) are glued in.

24. Door for motor vehicles according to claim 20 or 21, characterised thereby, that the guide strips (12) are formed by metallic profiles.

25. Door for motor vehicles according to one of the claims 1 to 24, characterised thereby, that mounting ribs (13) are injection-moulded on at the carrier construction (1 + 2).

26. Door for motor vehicles according to claim 25, characterised thereby, that the guide strip is formed of a U-shaped metallic profile and screwed on at the mounting rib (13).

27. Door for motor vehicles according to one of the claims 1 to 26, characterised thereby, that the outer door shell (3) is formed of a surrounding window escutcheon (14) with an outward door cladding (3') arranged underneath the window opening.

28. Door for motor vehicles according to claim 27, characterised thereby, that the window escutcheon (14) is divided in horizontal direction.

29. Door for motor vehicles according to claim 27 or 28, characterised thereby, that the window escutcheon (14) displays Z-shaped cross-section.

30. Door for motor vehicles according to one of the claims 1 to 29, characterised thereby, that the guide strip (12) is let into the window escutcheon (14) in the window region.

31. Door for motor vehicles according to one of the claims 1 to 30, characterised thereby, that the window escutcheon (14) is injection-moulded on at the profile frame (1).

32. Door for motor vehicles according to one of the claims 1 to 31, characterised thereby, that the window pane (11) is arranged in approximately the same plane as the window escutcheon (14) and the outer door shell (3).

33. Door for motor vehicles according to one of the claims 27 to 32, characterised thereby, that the outward door cladding (3') on the side facing the carrier construction (1 + 2) displays a surrounding areal profile (15), which lies against the profile frame (1) and is connectable with this.

34. Door for motor vehicles according to claim 33, characterised thereby, that the areal profile (15) of the outward door cladding (3') is constructed to be re-inforced in the connecting region.

35. Door for motor vehicles according to one of the claims 27 to 34, characterised thereby, that the areal profile (15), lying against the profile frame (1), of the outward door cladding (3') is connected with the profile frame (1) by gluing or welding.

36. Door for motor vehicles according to one of the claims 1 to 35, characterised thereby, that the outward door cladding (3') displays an areal stiffening (16) on the inward cladding surface.

37. Door for motor vehicles according to claim 36, characterised thereby, that the areal stiffening (16) displays asymmetrical star shape.

38. Door for motor vehicles according to claim 36 or 37, characterised thereby, that the areal stiffening (16) displays different wall thicknesses.

39. Door for motor vehicles according to one of the claims 36 to 38, characterised thereby, that the areal stiffening (16) increases in thickness steplessly from the edge zones to the centre.

40. Door for motor vehicles according to one of the claims 1 to 39, characterised thereby, that the carrier construction (1 + 2) is formed of a lower main region door part (17) and of a window region part.

41. Door for motor vehicles according to claim 40, characterised thereby, that a respective recess (18) for the reception of a frame (19 + 19') forming the window region part is arranged at the upper outer boundary of the main region door part (17) of the carrier construction (1 + 2).

42. Door for motor vehicles according to claim 40 or 41, characterised thereby, that the window frame (19) is formed of synthetic material.

43. Door for motor vehicles according to one of the claims 40 to 42, characterised thereby, that the window frame (19) consisting of synthetic material is connectable with the main region door part (17) consisting of synthetic material.

44. Door for motor vehicles according to one of the claims 40 to 43, characterised thereby, that a carrier profile (20) and a pane guidance profile (21) are associated with the window frame (19) consisting of synthetic material.

45. Door for motor vehicles according to one of the claims 40 to 44, characterised thereby, that the pane guidance profile (21) displays U-shape or L-shape.

46. Door for motor vehicles according to one of the claims 40 to 45, characterised thereby, that the pane guidance profile (21) is glued into the carrier profile (20).

47. Door for motor vehicles according to claim 40 or 41, characterised thereby, that the window frame (19') is formed of metal.

48. Door for motor vehicles according to one of the claims 40 to 47, characterised thereby, that the window frame (19') consisting of metal is screwable together with the main region door part (17) consisting of synthetic material.

49. Door for motor vehicles according to claim 47 or 48, characterised thereby, that a carrier profile (20') and a pane guidance profile (21') are associated with the window frame (19') consisting of metal.

50. Door for motor vehicles according to one of the claims 47 to 49, characterised thereby, that the carrier profile (20') is covered by a surrounding synthetic material profile (22).

51. Door for motor vehicles according to one of the claims 1 to 50, characterised thereby, that the pane guidance in the window region and in the pane box are formed by a common metal frame (23).

52. Door for motor vehicles according to claim 51, characterised thereby, that the metal frame (23) displays U-shaped cross-section in the window region and additional mounting limbs (24) in the pane box region.

53. Door for motor vehicles according to claim 51 or 52, characterised thereby, that the metal frame (23) is screwed to the mounting ribs (13) in the pane box.

54. Door for motor vehicles according to one of the claims 1 to 53, characterised thereby, that the door is structured to be frameless in the window region and the pane guidance takes place on a guide profile (25) of synthetic material and a window-sealing strip (26).

55. Door for motor vehicles according to claim 54, characterised thereby, that the guide profile (25) is let into the door frame.

56. Door for motor vehicles according to claim 54 or 55, characterised thereby, that the window-sealing strip (26) is glued into the guide profile (25).

57. Door for motor vehicles according to one of the claims 1 to 56, characterised thereby, that the inner door shell (4) displays a shaped pad with impact surface.

58. Door for motor vehicles according to one of the claims 1 to 57, characterised thereby, that the arm rest (27) is injection-moulded into the inner door shell (4).

59. Door for motor vehicles according to one of the claims 1 to 58, characterised thereby, that the parts of lock, handle and crank are arranged recessed in the inner door shell (4).

60. Door for motor vehicles according to one of the claims 1 to 59, characterised thereby, that the inner door shell (4) on the side facing the carrier construction displays a surrounding angle profile which lies against the profile frame (1) and is connectable with this.

61. Door for motor vehicles according to claim 60, characterised thereby, that the angle profile of the inner door shell (4) is constructed to be reinforced in the connecting region.

62. Door for motor vehicles according to one of the claims 1 to 61, characterised thereby, that the inner door shell (4) is fastened by being clipped or screwed to the carrier construction (1 + 2).

63. Door for motor vehicles according to one of the claims 1 to 62, characterised thereby, that all mounting positions (10) for mechanisms of lock and window are arranged in the shape of recessed surfaces, ribs, angles, holes, guides and bearings in the inner door shell (4).

64. Door for motor vehicles according to one of the claims 1 to 63, characterised thereby, that the inner door shell (4) on the inward cladding surface displays an areal stiffening in the shape of a rib construction.

65. Door for motor vehicles according to claim 64, characterised thereby, that the rib construction of the inner door shell (4) is led up to the load profiles (2') of the carrier construction (1 + 2) and bears against this.

66. Door for motor vehicles according to claim 64 or 65, characterised thereby, that a rubber profile is arranged between the bearing of the rib construction of the inner door shell (4) and the load profiles (2') of the carrier construction (1 + 2).

67. Door for motor vehicles according to one of the claims 1 to 66, characterised thereby, that a deposit box (28) of synthetic material is glued into the inner door shell (4).

68. Door for motor vehicles according to one of the claims 1 to 67, characterised thereby, that the inner door shell (4) is lined by a textile material.

69. Door for motor vehicles according to one of the claims 1 to 68, characterised thereby, that the carrier construction (1 + 2) and the inner door shell (4) are combined into one synthetic material part.

## Revendications

1. Porte en matière plastique pour véhicules automobiles, qui se compose d'une construction-support médiane, pour transmettre les efforts survenant, dans le cadre de la carrosserie et d'une coque extérieure de porte fixée à cette construction-support et d'une coque intérieure de porte, caractérisée en ce que la construction-support (1 + 2), qui est formée d'un cadre profilé (1) périphérique, en une ou plusieurs parties, pourvu de plusieurs nervures de raidissement (5), avec, au dessous de l'ouverture de fenêtre, un renforcement (2) injecté en profilés de résistance (2') se développant horizontalement et des nervures (2'') se développant verticalement, est formée sous la forme d'une construction en treillis.

2. Porte selon la revendication 1, caractérisée en ce que le cadre profilé (1) possède une section en forme de double T, ou bien en forme de U.

3. Porte selon la revendication 1 ou 2, caractérisée en ce que le cadre profilé (1) possède une section de profilé se modifiant de manière continue.

4. Porte selon l'une des revendications 1 à 3, caractérisée en ce que des nervures de raidissement (5) sont injectées des deux côtés, sur la traverse du cadre profilé (1) en forme de double T et se développant parallèlement aux rebords.

5. Porte selon l'une des revendications 1 à 3, caractérisée en ce que des nervures de raidissement (5) sont injectées sur la traverse du cadre profilé (1) en forme de U et se développant parallèlement aux rebords.

6. Porte selon la revendication 4 ou 5, caractérisée en ce que les nervures de raidissement (5) sont mutuellement disposees à intervalle identique.

7. Porte selon l'une des revendications 1 à 6, caractérisée en ce qu'une bande d'étanchéité de porte (6) périphérique est susceptible d'être placée dans le cadre profilé (1), du côté intérieur de porte.

8. Porte selon l'une des revendications 1 à 7, caractérisée en ce que la bande d'étanchéité de porte (6) est collée à l'intérieur et appuie bord-à-bord, sur les nervures de raidissement (5).

9. Porte pour véhicules automobiles, selon l'une des revendications 1 à 8, caractérisée en ce que les profilés de résistance (2') possèdent une forme en V, une forme en double T, ou bien une forme en U.

10. Porte pour véhicules automobiles, selon l'une des revendications 1 à 9, caractérisée en ce que les profilés de résistance (2') et les nervures verticales (2'') possèdent des attaches renforcées à leurs points de liaison et de raccordement.

11. Porte pour véhicules automobiles, selon la revendication 10, caractérisée en ce que les attaches se développent de manière arrondie.

12. Porte pour véhicules automobiles, selon l'une des revendications 1 à 11, caractérisée en ce que les nervures verticales (2'') sont guidées dans la zone inférieure comprise entre le cadre profilé (1) et le profilé de résistance (2') le plus bas qui se développe horizontalement, directement jusqu'à la surface intérieure de la coque extérieure de porte (3).

13. Porte pour véhicules automobiles, selon l'une des revendications 1 à 12, caractérisée en ce que les profilés de résistance (2') horizontaux et les nervures (2'') se développant verticalement émergent du côté intérieur de la construction-support (1 + 2), sur le cadre profilé (1) périphérique.

14. Porte pour véhicules automobiles, selon l'une des revendications 1 à 13, caractérisée en ce que les montants (7) du cadre profilé (1), qui sont situés à l'intérieur, sont prolongés horizontalement et verticalement dans la partie inférieure de la construction-support (1 + 2) et forment un cadre (8), sur le côté intérieur.

15. Porte pour véhicules automobiles, selon la revendication 14, caractérisée en ce que le cadre (8) est décalé vers l'intérieur, en forme d'étage (9), dans la zone de fond.

16. Porte pour véhicules automobiles, selon la revendication 15, caractérisée en ce que le cadre (8) crée une obturation, de manière affleurée, dans la construction-support (1 + 2), avec les profilés de charge (2') horizontaux et les nervures (2'') se développant verticalement.

17. Porte pour véhicules automobiles, selon la revendication 16, caractérisée en ce que le cadre profilé (1) périphérique se développe de manière affleurée, sur la construction en treillis (2' + 2'').

18. Porte pour véhicules automobiles, selon l'une des revendications 1 à 17, caractérisée en ce que, dans la construction-support (1 + 2), toutes les positions de montage (10) pour les charnières, les centrages, le mécanisme de serrure, de fenêtre et de retroviseur, sont disposées sous forme de surfaces, de nervures, cornières, trous, guidages et paliers.

19. Porte pour véhicules automobiles, selon l'une des revendications 1 à 18, caractérisée en ce que le côté extérieur de la construction en treillis (2' + 2'') est évidée, pour le guidage de la vitre de fenêtre (11).

20. Porte pour véhicules automobiles, selon l'une des revendications 1 à 19, caractérisée en ce que des bandes de guidage (12) sont disposées pour le guidage latéral de la vitre de fenêtre (11).

21. Porte pour véhicules automobiles, selon la revendication 20, caractérisée en ce que les bandes de guidage (12) possèdent une forme en L, ou bien une forme en U.

22. Porte pour véhicules automobiles, selon la revendication 20 ou 21, caractérisée en ce que les bandes de guidage (12) se composent de matière plastique.

23. Porte pour véhicules automobiles, selon l'une des revendications 20 à 22, caractérisée en ce que les bandes de guidage (12) sont collées à l'intérieur.

24. Porte pour véhicules automobiles, selon l'une des revendications 22 ou 23, caractérisée en ce que les bandes de guidage sont formées de profilés métalliques.

25. Porte pour véhicules automobiles, selon l'une des revendications 1 à 24, caractérisée en ce que des nervures de montage (13) sont rapportées par injection, sur la construction-support (1 + 2).

26. Porte pour vehicules automobiles, selon la revendication 25, caractérisée en ce que la bande de guidage formée d'un profilé métallique en forme de U est vissée sur la nervure de montage (13).

27. Porte pour vehicules automobiles, selon l'une des revendications 1 à 26, caractérisée en ce que la coque extérieure de porte (3) se compose d'un écran de fenêtre (14) périphérique, avec un revêtement extérieur de porte (3'), disposé au-dessous de l'ouverture de fenêtre.

28. Porte pour véhicules automobiles, selon la revendication 27, caractérisée en ce que l'écran de fenêtre (14) est subdivisé en direction horizontale.

29. Porte pour véhicules automobiles, selon la revendication 27 ou 28, caractérisée en ce que l'ecran de fenêtre (14) possède une section en forme de Z.

30. Porte pour véhicules automobiles, selon l'une des revendications 1 à 29, caractérisée en ce que la bande de guidage (12) est introduite dans l'ecran de fenêtre (14), dans la zone de fenêtre.

31. Porte pour véhicules automobiles, selon l'une des revendications 1 à 30, caractérisée en ce que l'ecran de fenêtre (I4) est rapporté par injection, sur le cadre profilé (1).

32. Porte pour véhicules automobiles, selon l'une des revendications 1 à 31, caractérisée en ce que la vitre de fenêtre (11) est approximativement disposée dans un plan commun au plan d'écran de fenêtre (14) et de coque extérieure de porte (3).

33. Porte pour véhicules automobiles, selon l'une des revendications 29 à 32, caractérisée en ce que le revêtement extérieur de porte (3') possède un profilé plan (15) périphérique, sur le côté tourné vers la construction-support (1 + 2), qui appuie sur le cadre profilé (1) et est susceptible d'être relié à celui-ci.

34. Porte pour véhicules automobiles, selon la revendication 33, caractérisée en ce que le profilé plan (15) du revêtement extérieur de porte (3') est réalisé de manière renforcé, dans la zone de liaison.

35. Porte pour véhicules automobiles, selon l'une des revendications 29 à 34, caractérisée en ce que le profilé plan (15) du revêtement extérieur de porte (3') appuyant sur le cadre profilé (1) est relié au cadre profilé (1), par collage, ou bien soudage.

36. Porte pour véhicules automobiles, selon l'une des revendications 1 à 35, caractérisée en ce que le revêtement extérieur de porte (3') possède un raidissement plan (16), sur la surface intérieure de revêtement.

37. Porte pour véhicules automobiles, selon la revendication 36, caractérisée en ce que le raidissement plan (16) possède une forme en étoile assymétrique.

38. Porte pour véhicules automobiles, selon la revendication 36 ou 37, caractérisée en ce qu le raidissement plan (16) possède des épaisseurs de paroi différentes.

39. Porte pour véhicules automobiles, selon la revendication 38, caractérisée en ce que le raidissement plan (16) se renforce de manière continue, depuis les zones de bord, vers le milieu.

40. Porte pour véhicules automobiles, selon l'une des revendications 1 à 39, caractérisée en ce que la construction-support (1 + 2) est formée d'une partie de zone principale de porte (17) et d'une partie de zone de fenêtre.

41. Porte pour véhicules automobiles, selon la revendication 40, caractérisée en ce qu une cavité (18) est disposée sur la délimitation supérieure extérieure de la partie de zone principale de porte (17) la construction-support (1 + 2), pour recevoir un cadre (19 + 19'), formant la partie de zone de fenêtre.

42. Porte pour véhicules automobiles, selon la revendication 41, caractérisée en ce que le cadre de fenêtre (19) est formé de matière plastique.

43. Porte pour véhicules automobiles, selon la revendication 42, caractérisée en ce que le cadre de fenêtre (19) se composant de matière plastique est susceptible d'être relié à la partie de zone principale de porte (17), composée en matière plastique.

44. Porte pour véhicules automobiles, selon l'une des revendications 42 et 43, caractérisée en ce qu'un profilé de support (20) et un profilé de guidage de vitre (21) sont affectés au cadre de fenêtre (19) composé de matière plastique.

45. Porte pour véhicules automobiles, selon l'une des revendications 42 à 44, caractérisée en ce que le profilé de guidage de vitre (21) possède une forme en U, ou bien en L.

46. Porte pour véhicules automobiles, selon l'une des revendications 42 à 45, caractérisée en ce que le profilé de guidage de vitre (21) est collé à l'intérieur du profilé de support (20).

47. Porte pour véhicules automobiles, selon la revendication 42 ou 43, caractérisée en ce que le cadre de fenêtre (19') est formé en métal.

48. Porte pour véhicules automobiles, selon l'une des revendications 42 à 47, caractérisée en ce que le cadre de fenêtre (19') se composant de métal est susceptible d'être vissé à la partie de zone principale de porte (17), se composant de matière plastique.

49. Porte pour véhicules automobiles, selon la revendication 48, caractérisée en ce qu'un profilé de support (20') et un profilé de guidage de vitre (21') sont affectés au cadre de fenêtre (19') se composant de métal.

50. Porte pour véhicules automobiles, selon la revendication 49, caractérisée en ce que le profilé de support (20') est recouvert au moyen d'un profilé de recouvrement (22) périphérique, en matière plastique.

51. Porte pour véhicules automobiles, selon l'une des revendications 1 à 50, caractérisée en ce que dans la zone de fenêtre et dans le caisson de vitre, le guidage de vitee est formé par un cadre métallique (23) commun.

52. Porte pour véhicules automobiles, selon la revendication 51, caractérisée en ce que le cadre métallique (23) possède une section en forme de U, dans la zone de fenêtre et un montant de montage (24) en plus, dans la zone de caisson de vitre.

53. Porte pour véhicules automobiles, selon la revendication 52, caractérisée en ce que le cadre métallique (23) est visse sur les nervures de montage (13), dans le caisson de vitre.

54. Porte pour véhicules automobiles, selon l'une des revendications 1 à 53, caractérisée en ce que la porte est réalisée sans cadre, dans la zone de fenêtre et que le guidage de vitre s'effectue sur un profilé de guidage (25), en matière plastique et une bande d'étanchéité de fenêtre (26).

55. Porte pour véhicules automobiles, selon la revendication 54, caractérisée en ce que le profilé de guidage (25) est introduit dans le cadre de porte.

56. Porte pour véhicules automobiles, selon la revendication 55, caractérisée en ce que la bande d'étanchéité de fenêtre (26) est collée à l'intérieur du profilé de guidage (25).

57. Porte pour véhicules automobiles, selon l'une des revendications 1 à 56, caractérisée en ce que la coque intérieure de porte (4) possède un rembourrage de forme, avec une surface de rebondissement.

58. Porte pour véhicules automobiles, selon l'une des revendications 1 à 57, caractérisée en ce que l'appui-bras (27) est injecté dans la coque intérieure de porte (4).

59. Porte pour véhicules automobiles, selon l'une des revendications 1 à 58, caractérisée en ce que les parties de serrure, de poignée et de manivelle sont disposées de manière renfoncée dans la coque intérieure de porte (4).

60. Porte pour véhicules automobiles, selon l'une des revendications 1 à 59, caractérisée en ce que, du côté qui est tourne vers la construction-support, la coque intérieure de porte (4) possède un profil angulaire périphérique, qui appuie sur le cadre profilé (1) et est susceptible d'être relie à celui-ci.

61. Porte pour véhicules automobiles, selon la revendication 60, caractérisée en ce que le profil angulaire de la coque intérieure de porte (4) est réalisé de manière renforcée, dans la roue de liaison.

62. Porte pour véhicules automobiles, selon l'une des revendications 1 à 61, caractérisée en ce que la coque intérieure de porte (4) est fixée sur la construction-support (1 + 2), de manière encliquetée ou bien vissée.

63. Porte pour véhicules automobiles, selon l'une des revendications 1 à 62, caractérisée en ce que, dans la coque intérieure de porte (4), toutes les positions de montage (10), pour le mécanisme de serrure et de fenêtre, sont disposées sous forme de surfaces creuses, de nervures, de cornières, de trous, de guidages et de paliers.

64. Porte pour véhicules automobiles, selon l'une des revendications 1 à 63, caractérisée en ce que la coque intérieure de porte (4) possède un raidissement plan, sur la surface intérieure de revêtement, sous la forme d'une construction à nervures.

65. Porte pour véhicules automobiles, selon la revendication 64, caractérisée en ce que la construction à nervures de la coque intérieure de porte (4) est guidée jusque sur les profilés de résistance (2') de la construction-support (1 + 2) et appuie sur ceux-ci.

66. Porte pour véhicules automobiles, selon la revendication 65, caractérisée en ce qu un profilé en caoutchouc est disposé entre l'appui de la construction à nervures de la coque intérieure de porte (4) et les profilés de résistance (2') de la construction-support (1 + 2).

67. Porte pour véhicules automobiles, selon l'une des revendications 1 à 66, caractérisée en ce qu'une boîte de rangement (28) en matière plastique est collée à l'intérieur de la coque intérieure de porte (4).

68. Porte pour véhicules automobiles, selon l'une des revendications 1 à 67, caractérisée en ce que la coque intérieure de porte (4) est doublée d'un matériau textile.

69. Porte pour véhicules automobiles, selon l'une des revendications 1 à 65, caractérisée en ce que la construction-support (1 + 2) et la coque intérieure de porte (4) sont assemblées en une partie en matière plastique.

**FIG. 1**

FIG. 2

FIG. 3a

FIG. 3b

FIG. 3c

FIG. 4a

FIG. 4b

FIG. 4c

FIG. 5a

FIG. 5b

FIG. 5c

FIG. 6a

FIG. 6b

FIG. 6c

FIG. 7

FIG. 8

FIG. 9

FIG. 10

FIG. 11

FIG. 12

FIG. 13